# EUROPÄISCHE PATENTANMELDUNG

(11) **EP 2 065 568 A1**
(43) Veröffentlichungstag der Anmeldung: **03.06.2009**
(21) Anmeldenummer: 07023055.2
(22) Anmeldetag: 28.11.2007
(51) Int. Cl.: F01D 25/14, F01D 25/26, F01D 25/08, F01D 25/12, F02C 7/12

(54) **Kühlung einer Dampturbine**

(71) Anmelder: SIEMENS AKTIENGESELLSCHAFT, 80333 München (DE)
(72) Erfinder: Almstedt, Henning, 45481 Mühleim an der Ruhr (DE)

(57) **Zusammenfassung**

Die Erfindung betrifft eine Strömungsmaschine (1), insbesondere eine Dampfturbine, wobei die Dampfturbine (1) ein Gehäuse (3) aufweist und um das Gehäuse (3) eine Ummantelung (4) vorgesehen ist, wobei die Ummantelung (4) beabstandet zum Gehäuse (3) angeordnet ist, um das Gehäuse (3) durch ein zuzuführendes Kühlmedium (5) zu kühlen.

## Beschreibung

Die Erfindung betrifft eine Strömungsmaschine, insbesondere eine Dampfturbine, umfassend ein Gehäuse, wobei um das Gehäuse eine Ummantelung angeordnet ist, wobei das Gehäuse und die Ummantelung beabstandet zueinander sind. Die Erfindung betrifft des Weiteren ein Verfahren zur Kühlung einer Strömungsmaschine, insbesondere einer Dampfturbine, wobei ein Kühlmedium, vorzugsweise Kühlluft, zwischen einem Gehäuse und einer Ummantelung bereitgestellt wird.

Unter der Sammelbezeichnung Strömungsmaschinen werden Wasserturbinen, Dampf- und Gasturbinen, Windräder, Kreiselpumpen und Kreiselverdichter sowie Propeller zusammengefasst. Allen diesen Maschinen ist gemeinsam, dass sie dem Zweck dienen, einem Fluid Energie zu entziehen, um damit eine andere Maschine anzutreiben oder umgekehrt einem Fluid Energie zuzuführen, um dessen Druck zu erhöhen.

In einer Dampfturbine, als Ausführungsform einer Strömungsmaschine, spielt der Wirkungsgrad eine entscheidende Rolle. Insbesondere bei einem Einsatz in einem Kraftwerk sollte der Wirkungsgrad der Dampfturbine einen möglichst hohen Wert aufweisen. Es werden daher Bestrebungen unternommen, den Wirkungsgrad einer Dampfturbine weiter zu erhöhen. Eine wirksame Möglichkeit, den Wirkungsgrad einer Dampfturbine zu erhöhen, ist gegeben durch die Steigerung der Dampfturbinen-Eintrittstemperatur. Derzeit werden Dampfturbinen mit Frischdampf beaufschlagt, der eine Temperatur bis zu 620°C aufweisen kann. Solch hohe Temperaturwerte führen dazu, dass die Festigkeitswerte der verfügbaren ferritischen bzw. martensitischen Werkstoffe schnell abnehmen. Dies führt dazu, dass ab einer bestimmten Grenztemperatur geeignetere Werkstoffe verwendet werden müssen, d.h., dass ein Werkstoffwechsel erforderlich ist. Ein Werkstoff, der bei solch hohen Temperaturen eingesetzt werden kann, wäre eine sogenannte Nickel-Basis-Legierung. Allerdings sind Nickel-Basis-Legierungen vergleichsweise kostenintensiv gegenüber den ferrititschen bzw. martensitischen Werkstoffen.

Um hohe Dampfturbinen-Eintrittstemperaturen zu ermöglichen, werden hochwarmfeste Werkstoffe wie z.B. 10%-iger Chromstahl verwendet. Durch eine intensive Entwicklung und Forschung von hochwarmfesten Stählen könnte eine neue Legierung entwickelt werden, die für hohe Temperaturen geeignet ist. Allerdings ist die Entwicklung solch neuer Werkstoffe sehr kostenintensiv und zeitaufwändig.

Eine weitere Möglichkeit dennoch hohe Dampfturbinen-Eintrittstemperaturen zu ermöglichen, ist gegeben durch die gezielte lokale Zufuhr von Kühldampf. In der Regel wird der Kühldampf aus dem Dampferzeuger zusätzlich entnommen, um diesen Dampf als Kühldampf zu verwenden, um thermisch belastete Bauteile zu kühlen.

Wünschenswert wäre es eine Strömungsmaschine zu haben, die mit einfachen Mitteln bei hohen Temperaturen betrieben werden könnte, ohne einen zwingenden Wechsel auf hochwarmfeste Werkstoffe bzw. auf eine zusätzliche geregelte Entnahme aus dem Dampferzeuger hinzunehmen.

An dieser Stelle setzt die Erfindung an, dessen Aufgabe es ist, eine Strömungsmaschine anzugeben, die mit einfachen Mitteln gekühlt werden kann.

Eine weitere Aufgabe der Erfindung ist es ein Verfahren zur Kühlung einer Strömungsmaschine anzugeben.

Die auf die Strömungsmaschine hin gerichtete Aufgabe wird dadurch gelöst, dass die Strömungsmaschine, insbesondere eine Dampfturbine, ein Gehäuse umfasst und um das Gehäuse eine Ummantelung angeordnet ist, wobei das Gehäuse und die Ummantelung beabstandet zueinander sind.

Es wird somit der Weg eingeschlagen, das Gehäuse einer Strömungsmaschine, insbesondere einer Dampfturbine von außen aktiv zu kühlen. Dafür wird eine Ummantelung um das Gehäuse angeordnet. Die Ummantelung ist hierbei zum Gehäuse beabstandet, wodurch ein Kühlmedium zwischen dem Gehäuse und der Ummantelung strömbar ist. Durch natürliche Konvektion wird dadurch eine Temperaturerhöhung des Gehäuses verringert, da das Kühlmedium die Wärme sozusagen abtransportiert. Somit kann das Gehäuse effektiv gekühlt werden, was dazu führt, dass ein Werkstoffwechsel zu einem teuren hochwarmfesten Werkstoff nicht erforderlich ist. Eine Ummantelung ist hierbei vergleichsweise günstig auszuführen, wodurch die Strömungsmaschine mit einfachen Mitteln gekühlt werden kann, und dadurch eine Erhöhung der Frischdampf-Eintrittstemperatur möglich ist. Dadurch erhöht sich der Wirkungsgrad der Dampfturbine.

Weitere vorteilhafte Weiterbildungen sind in den Unteransprüchen angegeben. So ist es vorteilhaft, wenn das Gehäuse der Strömungsmaschine ein Unterteil und ein Oberteil aufweist, wobei die Ummantelung über dem Unterteil und dem Oberteil angeordnet ist. Dadurch wird das gesamte Gehäuse der Strömungsmaschine gekühlt. Dadurch wird vermieden, dass das Gehäuse lokal zu stark thermisch beansprucht wird. Selbstverständlich ist es vorteilhaft, wenn die gesamte Strömungsmaschine gekühlt wird.

Zweckmäßigerweise ist die Ummantelung zum Führen vom Kühlmedium ausgebildet. Dies geschieht in erster Linie durch eine einfache Beabstandung der Ummantelung zum Gehäuse. Der Abstand der Ummantelung zum Gehäuse kann hierbei durch die vorhandenen Verhältnisse bestimmt werden, wie z.B. der Menge an Kühlluft und der Größe des Gehäuses. Die Form der Ummantelung könnte ebenfalls an die Kühlungsforderung angepasst werden.

In einer weitern vorteilhaften Weiterbildung weist die Ummantelung einen Kühlmedium-Einlass und einen Kühlmedium-Auslass auf. Der Kühlmedium-Einlass ist zur Einführung des Kühlmediums vorgesehen. Das Kühlmedium kann über diesen Kühlmedium-Einlass zwischen das Gehäuse und der Ummantelung einströmen. Über den Kühlmedium-Auslass strömt das wegen der Berührung mit dem Gehäuse erwärmte Kühlmedium aus. Das Gehäuse wird dadurch effektiv gekühlt.

In einer weiteren vorteilhaften Weiterbildung ist an einer Unterseite der Ummantelung der Kühlmedium-Einlass und an einer Oberseite der Ummantelung der Kühlmedium-Auslass angeordnet. Das Kühlmedium strömt aus physikalischen Gründen in der Regel nach oben, wenn das Kühlmedium erhitzt ist und gegenüber einer Umgebungstemperatur wärmer ist. Es ist daher zweckmäßig, das Kühlmedium von unten in die Ummantelung über den Kühlmedium-Einlass einströmen zu lassen. Das Kühlmedium erwärmt sich anschließend zwischen dem Gehäuse und der Ummantelung an dem warmen Gehäuse und strömt anschließend aus dem Kühlmedium-Auslass aus der Oberseite der Ummantelung aus.

In einer weiteren vorteilhaften Weiterbildung ist eine Strömungszufuhr-Einrichtung zum Zuführen von Kühlmedium vorgesehen. Durch diese Maßnahme kann die Durchflussrate an Kühlmedium in den Raum zwischen der Ummantelung und dem Gehäuse erhöht werden. Eine Erhöhung der Kühlmedium-Rate führt zu einer erhöhten Kühlwirkung.

Die auf das Verfahren zur Kühlung einer Strömungsmaschine hin gerichtete Aufgabe wird gelöst, indem ein Kühlmedium, vorzugsweise Kühlluft, zwischen einem Gehäuse und einer Ummantelung bereitgestellt wird.

In einer vorteilhaften Weiterbildung strömt das Kühlmedium über einen an einer Unterseite der Ummantelung angeordneten Kühlmedium-Einlass ein und strömt über einen an der Oberseite der Ummantelung angeordneten Kühlmedium-Auslass aus. Die Vorteile ergeben sich entsprechend aus den zur Strömungsmaschine entsprechend erwähnten Vorteilen.

Nachfolgend wird ein Ausführungsbeispiel einer erfindungsgemäßen Strömungsmaschine anhand der beigefügten schematischen Zeichnung näher erläutert.

### Es zeigt:

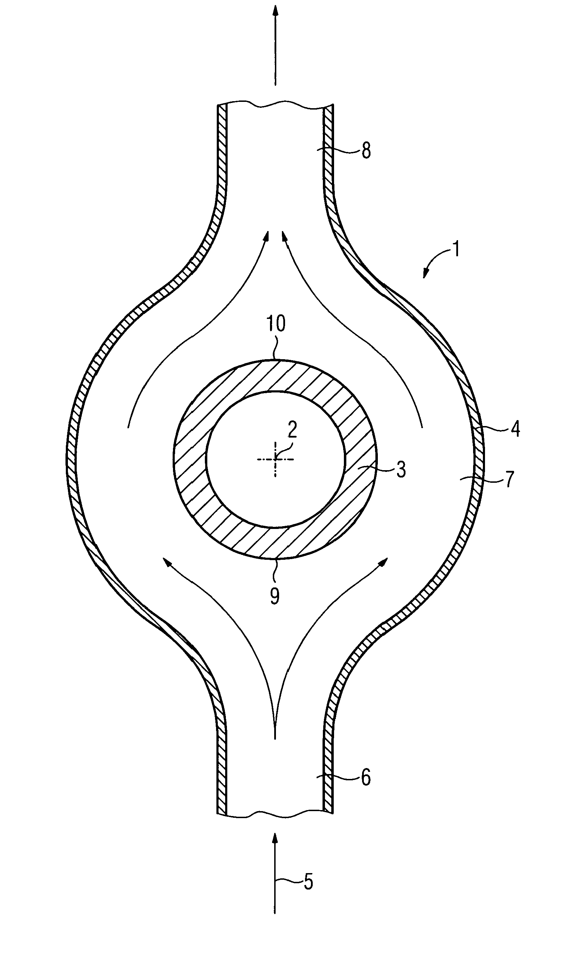

- Figur 1: einen Schnitt durch eine Strömungsmaschine umfassend eine Ummantelung in Rotationsrichtung gesehen.

In der Figur 1 ist eine Schnittansicht durch eine Strömungsmaschine 1 zu sehen. Die Strömungsmaschine 1 kann beispielsweise eine Dampfturbine sein. Die Strömungsmaschine 1 ist im Wesentlichen um eine Rotationsachse 2 rotationssymmetrisch ausgebildet und weist ein Gehäuse 3 auf. Das Gehäuse 3 kann ein Außengehäuse sein.

Der Übersichtlichkeit wegen sind der Dampfeinlass und der Dampfauslass der Strömungsmaschine 1 nicht dargestellt. Im Betrieb strömt heißer Frischdampf in die Strömungsmaschine 1 ein, was zu einer Erwärmung des Gehäuses 3 führt.

Um das Gehäuse 3 wird eine Ummantelung 4 beabstandet zum Gehäuse 3 angeordnet. Die Ummantelung 4 ist hierbei aus einem geeigneten Material hergestellt. Der Abstand zwischen dem Gehäuse und der Ummantelung 4 kann hierbei abhängig von den Bedingungen, wie z.B. der Temperatur des Gehäuses 3 und der Art eines Kühlmediums bestimmt werden.

Ein Kühlmedium strömt über einen Kühlmedium-Einlass 6 in einen Raum zwischen der Ummantelung 4 und dem Gehäuse 3. Das Kühlmedium 5 hat hierbei die Möglichkeit um das Gehäuse zu strömen und dabei sich zu erwärmen. Das erwärmte Kühlmedium 5 wird schließlich über einen Kühlmedium-Auslass 8 ausgeströmt.

Dadurch ist es möglich, durch natürliche Konvektion das Gehäuse 3 zu kühlen. Außerdem ist es möglich, die Wandstärke des Gehäuses 3 zu reduzieren, wodurch höhere thermische Transienten möglich sind. Dadurch ist die Flexibilität im Bezug auf die Fahrweise verbessert. Außerdem ist die Anwendung sehr teurer hochwarmfeste Werkstoffe im Wellenbereich auf ein Mindestmaß eingeschränkt worden. Ein Werkstoffwechsel kann in Grenzfällen vermieden werden.

Als Kühlmedium 5 kann hierbei Kühlluft verwendet werden. Um die Kühlwirkung zu verbessern, ist eine Strömungszufuhr-Einrichtung zum Zuführen des Kühlmediums 5 vorgesehen. Die Strömungszufuhr-Einrichtung ist in der Figur 1 nicht näher dargestellt. Die Strömungszufuhr-Einrichtung kann als einfaches Gebläse ausgebildet sein. Durch die Strömungszufuhr-Einrichtung kann die Rate des Kühlmediums 5 erhöht werden, wodurch die Kühlwirkung auf das Gehäuse 3 vergrößert wird.

Messungen haben gezeigt, dass durch das Vorsehen der Ummantelung 4 ein Temperaturabbau in Bezug auf die mittlere Wandtemperatur von 20°C bis 30°C möglich ist. Die Kühlluftzufuhr und -abfuhr kann durch entsprechende Rohrsysteme geführt werden.

Der Kühlmedium-Einlass 6 befindet sich unterhalb des Gehäuses 3. Das Gehäuse 3 weist ein Unterteil 9 und ein Oberteil 10 auf. Der Kühlmedium-Einlass 6 ist unterhalb des Unterteils 9 angeordnet. Der Kühlmedium-Auslass 8 ist oberhalb des Oberteils 10 angeordnet.

## Patentansprüche

1. Strömungsmaschine (1), insbesondere Dampfturbine, umfassend ein Gehäuse (3),
**dadurch gekennzeichnet, dass**
um das Gehäuse (3) eine Ummantelung (4) angeordnet ist,
wobei das Gehäuse (3) und die Ummantelung (4) beabstandet zu einander sind.

2. Strömungsmaschine (1) nach Anspruch 1,
wobei das Gehäuse (3) ein Unterteil (9) und ein Oberteil (10) aufweist,
wobei die Ummantelung (4) über dem Unterteil (9) und dem Oberteil (10) angeordnet ist.

3. Strömungsmaschine (1) nach Anspruch 1 oder 2,
wobei die Ummantelung (4) zum Führen vom Kühlmedium (5) ausgebildet ist.

4. Strömungsmaschine (1) nach einem der vorhergehenden Ansprüche,
wobei die Ummantelung (4) einen Kühlmedium-Einlass (6) und einen Kühlmedium-Auslass (8) aufweist.

5. Strömungsmaschine (1) nach Anspruch 4,
wobei der Kühlmedium-Einlass (6) an einer Unterseite der Ummantelung (4) angeordnet ist und
wobei der Kühlmedium-Auslass (8) an einer Oberseite der Ummantelung (4) angeordnet ist.

6. Strömungsmaschine (1) nach einem der vorhergehenden Ansprüche,
wobei eine Strömungszufuhr-Einrichtung zum Zuführen vom Kühlmedium (5) vorgesehen ist.

7. Verfahren zur Kühlung einer Strömungsmaschine (1), insbesondere einer Dampfturbine,
wobei ein Kühlmedium 5,
vorzugsweise Kühlluft,
zwischen einem Gehäuse (3) und einer Ummantelung (4) bereitgestellt wird.

8. Verfahren nach Anspruch 7,
wobei das Kühlmedium (5) über einen an einer Unterseite der Ummantelung (4) angeordneten Kühlmedium-Einlass (6) einströmt und über einen an einer Oberseite der Ummantelung (4) angeordneten Kühlmedium-Auslass (8) anströmt.
